# EUROPÄISCHE PATENTSCHRIFT

(11) **EP 1 926 624 B1**
(45) Veröffentlichungstag und Bekanntmachung des Hinweises auf die Patenterteilung: **14.04.2010**
(21) Anmeldenummer: 06777001.6
(22) Anmeldetag: 21.08.2006
(51) Int. Cl.: B60K 7/00, B60K 17/08, B62D 11/04

(54) **ANTRIEBSSYSTEM FÜR DEN EINZELANTRIEB DER BEIDEN ANTRIEBSRÄDER EINES ANTRIEBSRÄDERPAARES**
DRIVE SYSTEM FOR THE INDIVIDUAL DRIVE OF BOTH DRIVEN WHEELS OF A DRIVEN WHEEL PAIR
SYSTEME D'ENTRAINEMENT DESTINE A L'ENTRAINEMENT INDIVIDUEL DES DEUX ROUES MOTRICES D'UNE PAIRE DE ROUES MOTRICES

(30) Priorität: 22.09.2005 DE 102005045281
(43) Veröffentlichungstag der Anmeldung: 04.06.2008
(73) Patentinhaber: ZF Friedrichshafen AG, 88038 Friedrichshafen (DE)
(72) Erfinder: FREUDENREICH, Hans-Peter, 89608 Griesingen (DE)
(86) Internationale Anmeldenummer: PCT/EP2006/008218
(87) Internationale Veröffentlichungsnummer: WO 2007/033739

(56) Entgegenhaltungen:
- EP-A1- 0 498 340
- EP-A2- 0 965 511
- FR-A- 1 018 160
- US-A- 1 543 044
- US-A- 5 285 866

## Beschreibung

Die Erfindung betrifft ein Antriebssystem für den Einzelantrieb der beiden Antriebsräder eines Antriebsräderpaares oder dergleichen für ein Fahrzeug gemäß dem Oberbegriff des Patentanspruchs 1.

Antriebssysteme der im Oberbegriff des Anspruches 1 genannten Art werden seit geraumer Zeit beispielsweise in Fahrzeugen mit Rutschlenkung eingebaut, also in Fahrzeuge, bei denen zur Kurvenfahrt jeweils die kurveninneren Antriebsräder (oder Kettensterne eines Kettenfahrzeuges) gegenüber den kurvenäußeren Antriebsrädern verlangsamt werden. Die stufenlos regelbaren Antriebsmaschinen erlauben dabei ein weitgehend beliebiges Drehzahlverhältnis zwischen kurveninnerem Antriebsrad und kurvenäußerem Antriebsrad. Es hat sich jedoch gezeigt, dass stufenlos regelbare Antriebsmaschinen dann, wenn diesen eine Getriebeanordnung mit einem festen Übersetzungsverhältnis nachgeordnet ist, an ihre Grenzen bezüglich der Endgeschwindigkeit und dem Antriebsdrehmoment stoßen. Ein weiterer Nachteil wird auch darin gesehen, dass es aus Platzgründen häufig schwierig ist, zwei aus in Flucht zueinander angeordneten und aus Antriebsmaschine, Getriebeanordnung und Rad bestehenden Antriebsgruppen in Richtung der Drehachse des Antriebsräderpaares nebeneinander einzubauen und zu einer Antriebsachsanordnung zu gestalten.

Aus der nicht vorveröffentlichen WO 2006/094730 A1 ist ein Antriebssystem für den Einzelantrieb der beiden Antriebsräder eines Antriebsräderpaares oder dergleichen für ein Fahrzeug bekannt, umfassend zwei stufenlos regelbare Antriebsmaschinen, welche jeweils über eine Getriebeanordnung mit einem zugeordneten Antriebsrad oder dergleichen antriebsverbunden sind, bei dem die Getriebeanordnung jeweils zwei hintereinander angeordnete Getriebeeinheiten umfasst, wobei eine der Getriebeeinheiten als ein schaltbares Getriebe und die andere Getriebeeinheit als ein Kegelradgetriebe mit einer festen Übersetzung ausgebildet ist.

Bei diesem Antriebsstrang werden die beiden geschilderten technischen Probleme dadurch gelöst, dass jedem Antriebsrad zwei Getriebeeinheiten genutzt werden, von denen Getriebeeinheit für eine Änderung des Übersetzungsverhältnisses und die andere Getriebeeinheit für eine Verbesserung der Einbauverhältnisse ausgelegt ist. Mit Hilfe eines zweistufig schaltbaren Getriebes lassen sich zwei Drehzahl- bzw. Antriebsmomentbereiche vorwählen, während das Kegelradgetriebe die Möglichkeit eröffnet, die Antriebsmaschine und gegebenenfalls eine der beiden Getriebeeinheiten rechtwinklig zur Drehachse der Antriebsräder anzuordnen.

Das jeweilige schaltbare Getriebe der Getriebeeinheiten ist als ein zweistufiges Planetenradgetriebe ausgebildet, bei dem das Sonnenrad mit einer Antriebswelle und der Planetenradträger mit einer Abtriebswelle verbunden ist: Ein Hohlrad dieses Planetengetriebes ist wahlweise drehfest arretierbar oder mit der Abtriebswelle koppelbar. Zudem ist vorgesehen, dass das schaltbare Getriebe der Antriebsmaschine und das Kegelradgetriebe diesem Getriebe nachgeordnet ist.

Wenngleich dieses Antriebssystem sehr vorteilhaft ist, so besteht dennoch der Wunsch, ein solches Antriebssystem derart weiterzuentwickeln, dass dieses ohne große bauliche Veränderungen für unterschiedliche Fahrzeugtypen mit voneinander abweichenden Bauraumverhältnissen und unterschiedlichem Abstand der Antriebsaggregate zum Fahrweg nutzbar ist.

Des Weiteren ist aus der gattungsbildenden FR 1 018 160 A ein Antriebssystem für den Einzelantrieb zweier Antriebskettenräder eines Kettenfahrzeuges bekannt, umfassend zwei stufenlos regelbare Antriebsmaschinen, welche jeweils über eine Getriebeanordnung mit einem zugeordneten Antriebsrad oder dergleichen antriebsverbunden sind, wobei die Getriebeanordnung jeweils zwei Getriebeeinheiten umfasst, wobei eine der beiden Getriebeeinheiten als ein schaltbares Getriebe und die andere Getriebeeinheit als ein Kegelradgetriebe mit einer festen Übersetzung ausgebildet ist, und bei dem das Kegelradgetriebe einen Stirnradsatz und einen Kegelradsatz aufweist. Bei einem Antriebssystem dieser Bauart sind jedoch die Einbauraumverhältnisse und die Bodenabstände sehr begrenzt.

Vor diesem Hintergrund liegt der Erfindung die Aufgabe zugrunde, ein Antriebssystem der zuletzt geschilderten Art zu schaffen, welches es einerseits erlaubt, die Endgeschwindigkeit bzw. das Antriebsmoment zu variieren, und welches andererseits einen erleichterten Einbau in ein Fahrzeug ermöglicht. Zudem soll dieses Antriebssystem so aufgebaut sein, dass dieses nur durch geringe baulichen Änderungen unter Beibehaltung der meisten Bauteile des Antriebssystems für unterschiedliche Fahrzeugtypen und Einbauraumverhältnisse sowie Bodenabständen der Antriebsaggregate nutzbar ist.

Zur Lösung der gestellten Aufgabe ist vorgesehen, dass die Ausgangswelle zumindest eines schaltbaren Getriebes und die Antriebswelle des zugeordneten Antriebsmotors in Bezug zu einer Horizontalebene geneigt zur Fahrzeuglängsachse ausgerichtet sind, wodurch die Bodenfreiheit dieser Antriebsaggregate vergrößerbar ist.

Die Lösung dieser Aufgabe ergibt sich aus den Merkmalen des Hauptanspruches, während vorteilhafte Ausgestaltungen und Weiterbildungen der Erfindung den Unteransprüchen zu entnehmen sind.

Der Erfindung liegt die Erkenntnis zugrunde, dass sich dieser Aufgabe mit verhältnismäßig einfachen konstruktiven Mitteln dadurch verwirklichen lässt, dass man die oben genannten, der Erfindung zugrunde liegenden Teilaufgaben auf zwei Getriebeeinheiten verteilt, deren eine Getriebeeinheit für eine Änderung des Übersetzungsverhältnisses und deren andere Getriebeeinheit für eine Verbesserung der Einbauverhältnisse ausgelegt ist. Eine beinahe universelle Nutzbarkeit in unterschiedlichen Fahrzeugtypen wird durch eine besondere Ausbildung der Getriebeeinheiten erreicht.

Demnach geht die Erfindung aus von einem Antriebssystem für den Einzelantrieb der beiden Antriebsräder eines Antriebsräderpaares oder dergleichen für ein Fahrzeug, umfassend zwei stufenlos regelbare Antriebsmaschinen, welche jeweils über eine Getriebeanordnung mit einem zugeordneten Antriebsrad oder dergleichen antriebsverbunden sind.

Ausgehend von einem derartigen Antriebssystem ist vorgesehen, dass die jeweilige Getriebeanordnung zwei Getriebeeinheiten umfasst, wobei eine der zwei Getriebeeinheiten als ein schaltbares Getriebe und die andere Getriebeeinheit als ein Kegelradgetriebe mit einer festen Übersetzung ausgebildet ist, und bei dem das Kegelradgetriebe einen Stirnradsatz und einen Kegelradsatz aufweist.

Mit dem schaltbaren Getriebe ist die Antriebsübersetzung variierbar, während das Kegelradgetriebe es ermöglicht, die Antriebswellen der Antriebsmaschinen quer zur Drehachse der Antriebsräder anzuordnen. Der jeweilige Stirnradsatz gestattet eine fahrzeugtypbezogene Höher- oder Tieferstellung der Abtriebswellen der jeweiligen Getriebeeinheit. Zudem kann durch unterschiedliche Anordnung der Kegelräder der Kegelradgetriebe zueinander die Neigung des jeweiligen Antriebsmotors und schaltbaren Getriebes zur Fahrzeuglängsachse in Bezug zu einer Horizontalebene sowie der Abtriebswinkel der Abtriebswellen der Getriebeeinheiten konstruktiv leicht eingestellt werden, so dass dieses Antriebssystem mit einem weitgehend identischen Bauteileumfang für unterschiedliche Fahrzeugtypen nutzbar ist.

So lassen sich mit Hilfe eines mehrstufig schaltbaren Getriebes mehrere Drehzahl- bzw. Antriebsmomentbereiche vorwählen, während das Kegelradgetriebe die Möglichkeit eröffnet, die Antriebsmaschine und gegebenenfalls eine der beiden Getriebeeinheiten rechtwinklig zur Drehachse der Antriebsräder anzuordnen, welches die Einbaumöglichkeiten erheblich verbessert, wie anhand von Ausführungsbeispielen dargelegt werden wird. Die abtriebsseitige Stirnradstufe erlaubt demnach in Verbindung mit der Kegelradstufe einen hinsichtlich seiner räumlichen Ausrichtung in weiten Bereichen einstellbaren Getriebeabtrieb sowie eine Variation der geometrischen Ausrichtung der Antriebsmotoren und der Getriebe quer zur Fahrzeuglängsachse.

In einer bevorzugten Ausgestaltung eines Antriebssystems gemäß der Erfindung ist vorgesehen, dass das schaltbare Getriebe ein zweistufiges Planetenradgetriebe ist, dessen Sonnenrad mit einer Antriebswelle verbunden ist, dessen Planetenradträger mit einer Abtriebswelle in Antriebsverbindung ist, und dessen Hohlrad wahlweise drehfest arretierbar oder mit der Abtriebswelle koppelbar ist.

Planetenradgetriebe erlauben verhältnismäßig große Übersetzungen bei kompakter Bauweise. Eine Schaltung mittels des wahlweise arretierbaren oder mit der Abtriebswelle beziehungsweise mit dem damit fest verbundenen Planetenradträger koppelbaren Hohlrades ermöglicht wiederum bei geringem Bauaufwand einen großen Übersetzungssprung.

Gemäß einem weiteren Merkmal eines Antriebssystems gemäß der Erfindung ist vorgesehen, dass das schaltbare Getriebe jeder Getriebeeinheit der Antriebsmaschine nachgeordnet und das Kegelradgetriebe dem schaltbaren Getriebe nachgeordnet ist.

Eine erste besondere Variante des Antriebssystems gemäß der Erfindung sieht in Richtung der Fahrzeuglängsachse hintereinander angeordnete Antriebsmaschinen vor, wobei der Kegelradsatz des Kegelradgetriebes ein erstes Kegelrad aufweist, welches mit der Abtriebswelle des schaltbaren Getriebes drehfest verbunden ist und mit einem zweiten Kegelrad in Zahneingriff ist, während das zweite Kegelrad mit einem ersten Stirnrad drehfest verbunden oder einstückig ausgebildet ist, welches mit einem zweiten Stirnrad im Zahneingriff ist, das drehfest mit der Ausgangswelle der jeweiligen Getriebeanordnung verbunden ist.

Eine zweite besondere Variante des Antriebssystems gemäß der Erfindung sieht vor, dass der Stimradsatz des Kegelradgetriebes ein erstes Stirnrad aufweist, welches mit der Abtriebswelle des schaltbaren Getriebes drehfest verbunden und mit einem zweiten Stirnrad in Zahneingriff ist. Dieses zweite Stirnrad ist mit einem ersten Kegelrad drehfest verbunden oder mit diesem einstückig ausgebildet, welches mit einem zweiten Kegelrad im Zahneingriff ist, das drehfest mit der Ausgangswelle der jeweiligen Getriebeanordnung verbunden ist.

Gemäß einer weiteren Ausgestaltung eines Antriebssystems gemäß der Erfindung ist vorgesehen, dass die Antriebswellen der beiden Antriebsmaschinen im Wesentlichen rechtwinklig zu der Drehachse des Antriebsräderpaares angeordnet sind, und dass die jeweiligen Kegelradgetriebe einen Umlenkwinkel von im Wesentlichen 90° aufweisen.

Eine axiale Verkürzung des Antriebssystems ergibt sich, wenn die Ausgangswelle zumindest eines schaltbaren Getriebes und die Antriebswelle des zugeordneten Antriebsmotors senkrecht zur Fahrzeuglängsachse ausgerichtet sind. Eine weitere axiale Verkürzung sowie eine Verringerung der Breite des Antriebssystems sind erreichbar, wenn diese Antriebsaggregate hinsichtlich ihrer Abtriebswellen zusätzlich auch noch senkrecht zur Fahrzeugquerachse angeordnet sind.

Gemäß einer anderen Weiterbildung ist vorgesehen, dass die Drehachse des kombinierten Kegel- und Stirnrades in einer anderen horizontalen Ebene liegt wie die Drehachse der Ausgangswelle der jeweiligen Getriebeanordnung. Durch diese konstruktive Eigenart kann der Abtrieb der Getriebeanordnung im Fahrzeug vergleichsweise tief in Richtung zur Fahrbahn angeordnet werden, so dass bei einem Antrieb der Antriebsräder des Fahrzeugs mittels Gleichlaufgelenkwellen deren maximaler Auslenkwinkel zur Realisierung besonders großer Federwege der Antriebsräder nutzbar ist.

Entsprechend einer weiteren Ausgestaltungsform ist vorgesehen, dass die Antriebsmaschinen und die Getriebe in Bezug zur Fahrzeuglängsachse im Wesentlichen hintereinander oder im Wesentlichen nebeneinander angeordnet sind. Gemäß der ersten Variante baut das Antriebssystem in Fahrzeuglängsrichtung vergleichsweise schmal und lang, während gemäß der zweiten Variante ein vergleichsweise kurzes aber breiteres Antriebssystem herstellbar ist.

Bevorzugt sind die Antriebsmaschinen oberhalb der Drehachse der Ausgangswellen der Getriebeanordnung angeordnet, um eine optimal Bodenfreiheit zu erzielen.

Eine andere Ausführungsform der Erfindung sieht vor, dass die Antriebswellen der Antriebsmaschinen jeweils rechtwinklig zu der Drehachse des Antriebsräderpaares angeordnet sind, und dass das jeweilige Kegelradgetriebe einen Umlenkwinkel von im Wesentlichen 90° aufweist. Auf diese Weise lassen sich die Antriebsmaschinen beispielsweise entlang der Fahrzeuglängsachse vor bzw. hinter der Drehachse des Antriebsräderpaares anordnen, so dass die Getriebeanordnungen aufeinander zuweisend nahe der Fahrzeuglängsachse platziert und über verhältnismäßig lange Gelenkwellen mit einzeln federnd aufgehängten Antriebsrädern verbunden werden können.

Die Antriebsmaschinen sind vorzugsweise Elektromotoren, deren Drehzahl-in einfacher Weise regelbar ist.

Schließlich ist vorgesehen, dass das Antriebssystem gemäß der Erfindung vorzugsweise bei Fahrzeugen eingesetzt ist, bei denen die Antriebsrädern einzeln federnd aufgehängt sind, wobei diese über Gelenkwellen an die zugeordneten Antriebsmaschinen beziehungsweise die diesen nachgeordneten Getriebeeinheiten angeschlossen sind.

Mehrere Ausführungsbeispiele der Erfindung sind in der Zeichnung dargestellt und im Folgenden näher beschrieben.
Es zeigen:
- Fig. 1: ein Antriebssystem mit in Fahrzeuglängsrichtung liegender Anordnung der Antriebsaggregate, bei welchem jeder Antriebsmaschine jeweils ein schaltbares Getriebe und ein Kegelradgetriebe mit einer Stirnradstufe nachgeordnet ist und
- Fig. 2: ein Antriebssystem wie in Fig. 1, jedoch in stehender Anordnung der Antriebsaggregate.

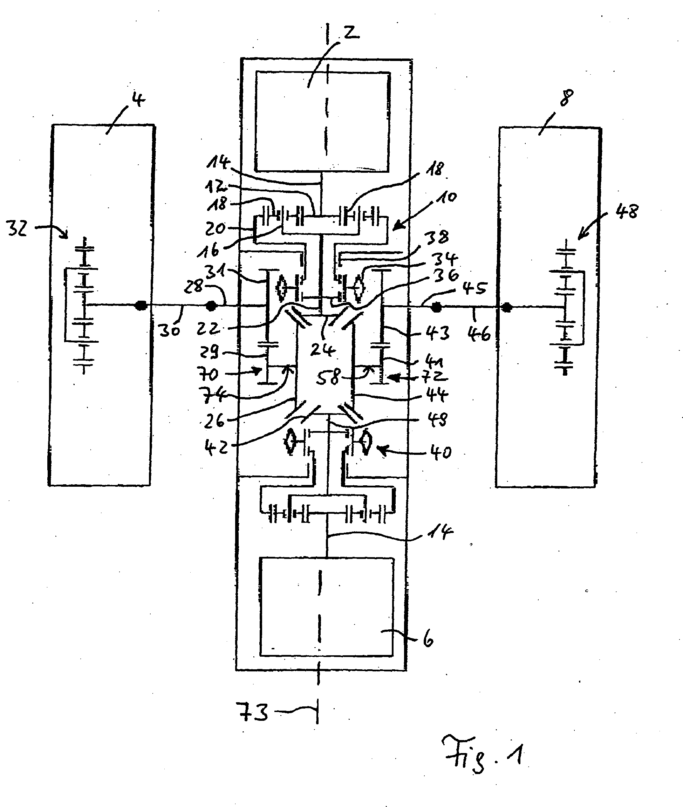

Das in Fig. 1 dargestellte Antriebssystem umfasst eine erste Antriebsmaschine 2, welche einem ersten Antriebsrad 4 zugeordnet ist, sowie eine zweite Antriebsmaschine 6, welche einem zweiten Antriebsrad 8 zugeordnet ist. Der ersten Antriebsmaschine 2 ist ein zweistufig schaltbares Getriebe 10 nachgeordnet, welches als Planetenradgetriebe ausgebildet ist. Das Sonnenrad 12 dieses Getriebes 10 ist mit einer Antriebswelle 14 der Antriebsmaschine 2 verbunden, und es steht in Eingriff mit mehreren am Planetenradträger 16 angeordneten Planetenrädern 18, die andererseits mit der Innenverzahnung eines Hohlrades 20 im Eingriff sind.

Die beiden Antriebsmaschinen 2, 6 sowie die jeweils nachgeordneten Getriebe sind im Wesentlichen hintereinander in einer Horizontalebene eines nicht weiter dargestellten Fahrzeugs angeordnet, in der sich auch die Fahrzeuglängsachse 73 befindet.

Der Planetenradträger 16 ist mit einer Abtriebswelle 22 verbunden, die an ihrem freien Ende ein Kegelrad 24 trägt, welches mit einem Kegelrad 26 im Eingriff ist. Dieses Kegelrad 26 ist erfindungsgemäß mit einem Stirnrad 29 drehfest verbunden oder einstückig mit diesem ausgebildet, welches mit einem Stirnrad 31 am getriebeseitigen Ende einer Ausgangswelle 28 der Getriebeanordnung verbunden ist. Diese Ausgangswelle 28 steht über eine Gelenkwelle 30 mit dem ersten Antriebsrad 4 in Antriebsverbindung.

Die Gelenkwelle 30 ermöglicht eine federnde Aufhängung des Antriebsrades 4, wie allgemein bekannt und deshalb nicht näher erläutert ist. Das Antriebsrad 4 wird von der Gelenkwelle 30 über zudem ein weiteres Planetenradgetriebe 32 angetrieben, wie ebenfalls an sich bekannt und deshalb hier nicht nochmals erläutert ist.

Das Getriebe 10 ist als zweistufig schaltbares Getriebe ausgebildet. Zu diesem Zweck kann das Hohlrad 20 über ein Schaltritzel 34 wahlweise mit einem fest auf der Abtriebswelle 22 angeordneten Schaltzahnrad 36 gekoppelt werden, wie in Fig. 1 dargestellt ist, oder mit einer fest im Getriebegehäuse angeordneten Arretierverzahnung 38. Bei der in Fig. 1 dargestellten Schaltstellung sind der Planetenradträger 16 und das Hohlrad 20 fest miteinander drehgekoppelt. Es findet daher keine Abwälzung der Planetenräder 18 gegenüber dem Hohlrad 20 und damit auch gegenüber dem Sonnenrad 12 statt, so dass sich die Abtriebswelle 22 mit der Drehzahl der Antriebswelle 14 dreht.

Wenn das Hohlrad 20 über das Schaltritzel 34 mit der Arretierverzahnung 38 gekoppelt wird, dann ist das Hohlrad 20 beispielsweise gehäusefest arretiert und die Planetenräder 18 wälzen sich auf der Innenverzahnung des Hohlrades 20 ab, so dass die Drehzahl der Antriebswelle 14 in bekannter Weise in eine davon verschiedene Drehzahl der Abtriebswelle 22 übersetzt wird.

Das dem zweiten Antriebsrad 8 zugeordnete Antriebssystem ist gleich aufgebaut wie das oben beschriebene Antriebssystem für das Antriebsrad 4. Es umfasst ein der zweiten Antriebsmaschine 6 nachgeordnetes, zweistufig schaltbares, als Planetenradgetriebe ausgebildetes Getriebe 40 mit einer Abtriebswelle 49, ein aus den Kegelrädern 42 und 44 gebildetes Kegelradgetriebe, eine Zahnradstufe 41 an dem Kegelrad 44 und ein mit der letztgenannten Stirnradstufe 41 kämmendes Stirnrad 43, welches drehfest auf der Ausgangswelle 45 der zweiten Getriebeanordnung sitzt. Diese Ausgangswelle 45 ist mit einer Gelenkwelle 46 antriebswirksam verbunden, mit welcher ein weiteres, dem zweiten Antriebsrad 8 zugeordnetes Planetenradgetriebe 48 antreibbar ist.

Die beiden Antriebsräder 4 bzw. 8 werden jeweils unabhängig voneinander von den zugeordneten Antriebsmaschinen 2 beziehungsweise 6 angetrieben. Ein Leistungstransfer von einer Seite zur anderen findet nicht statt. Über die schaltbaren Getriebe 10, 40 erfolgt demnach eine Drehzahlregelung beziehungsweise Antriebsdrehmomentregelung des Fahrzeuges.

Um eine Kurvenfahrt einzuleiten, wird eines der beiden Antriebsräder 4 und/oder 8 durch eine entsprechende Drehzahlregelung der zugeordneten Antriebsmaschine 2, 6 in ihrer Drehzahl verlangsamt oder beschleunigt, so dass das Fahrzeug infolge unterschiedlicher Geschwindigkeiten der Antriebsräder eine Kurve fährt.

Wie Fig. 1 hinsichtlich des Zusammenwirkens der Zahnräder der beiden Getriebeanordnungen verdeutlicht, sind die jeweiligen Antriebsmotoren 2, 6 und die zugeordneten schaltbaren Getriebe 10, 40 dadurch, sozusagen aus der Papierebene heraus, gegen eine die Fahrzeuglängsachse 73 enthaltene Horizontalebene um einen Winkel anstellbar, indem der Eingriffspunkt des mit der jeweiligen Abtriebswelle 22, 49 verbundenen Kegelrades 24, 42 des schaltbaren Getriebes 10, 40 in das zugeordnete Kegelrad 26, 44 des Kegelradgetriebes 70, 72 variiert wird. Dazu wird konstruktiv der Eingriffspunkt der jeweiligen Zahnräder 24 und 26 bzw. 42 und 44 derart gewählt, dass dieser die für den jeweiligen Fahrzeugtyp gewünschte Position am Verzahnungsumfang des Kegelrades 26 bzw. 44 einnimmt. Durch diese Maßnahme lässt sich bei der Konstruktion des Antriebssystems eine erhöhte Bodenfreiheit für die genannten Antriebsmaschinen einstellen.

Sofern die Antriebswelle 14 des jeweiligen Antriebsmotors 2, 6 und die Abtriebswelle 22, 49 des jeweiligen schaltbaren Getriebes 10, 40 in der genannten Horizontalebene etwa in Fahrzeuglängsrichtung 73 konstruktiv fixiert ausgerichtet sind, so kann gemäß einer anderen Variante durch die erwähnte Einstellung des Eingriffspunktes der Abtriebswinkel der Ausgangswellen 28 bzw. 45 der beiden Getriebeanordnungen bei der Konstruktion bedarfsgerecht eingestellt werden. Bevorzugt wird dabei der Abtriebswinkel so gewählt, dass der maximal mögliche Beugewinkel einer zugeordneten Gleichlaufgelenkwelle 30, 46 optimal ausnutzbar ist.

Schließlich offenbart Fig. 1, dass bei diesem Antriebssystem auch der Ort der Ausgangswellen 28 bzw. 45 der Getriebeanordnungen fahrzeugtypspezifisch einstellbar ist. Dies ist dadurch realisierbar, indem der Eingriffspunkt des jeweiligen Stirnrades 31, 43 der jeweiligen Abtriebswelle 28, 45 in das zugeordnete Stirnrad 29, 41 des Kegelradgetriebes 70, 72 variiert wird. Durch diese konstruktive Maßnahme lassen sich demnach die Drehachsen der beiden Ausgangswellen 28 bzw. 45 der Getriebeeinheiten in Bezug zur Fahrbahn und zu den Drehachsen des kombinierten Kegel- und Stirnrades 26, 29 bzw. 41, 44 anheben oder absenken.

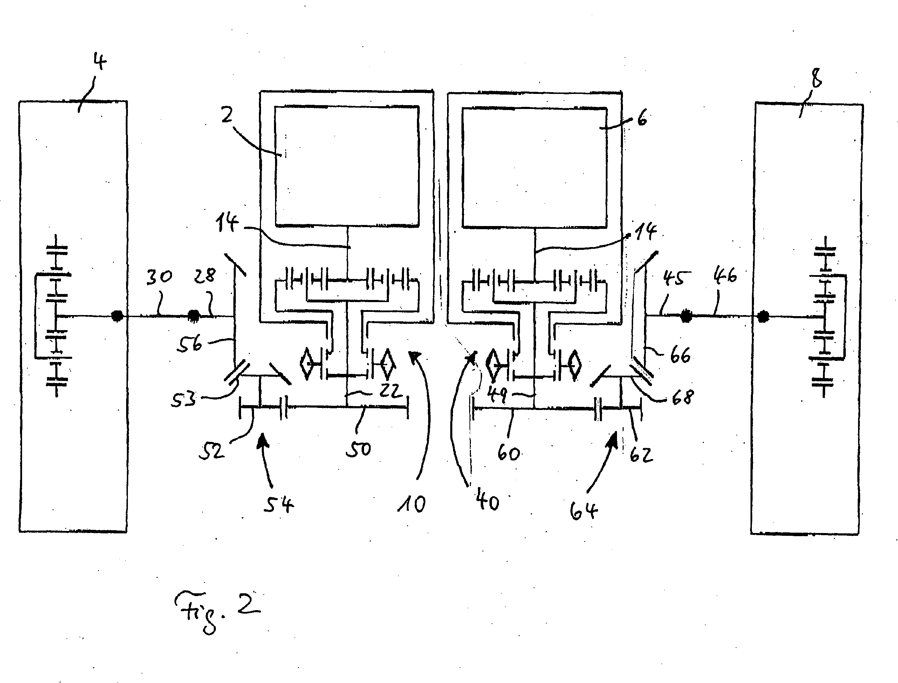

Fig. 2 zeigt ein Antriebssystem ähnlich wie das in Fig. 1, jedoch dargestellt mit Blick in Fahrzeuglängsrichtung 73. Im Unterschied zur Variante gemäß Fig. 1 sind die beiden Antriebsmaschinen 2, 6 sowie die schaltbaren Getriebe 10, 40 in stehender Anordnung anstatt wie bei Fig. 1 in liegender Anordnung im Fahrzeug verbaut. Dabei weisen die Ausgangswellen 22 und 49 der Getriebeanordnungen im Wesentlichen senkrecht zur Fahrbahn. Bei einer solchen stehenden Anordnung der Antriebsaggregate können diese beispielsweise in Abhängigkeit von den Bauraumverhältnissen des jeweiligen Fahrzeugs in Bezug auf die Fahrzeuglängsrichtung axial hintereinander oder wie in Fig. 2 dargestellt, nebeneinander im Fahrzeug angeordnet sein.

Wie Fig. 2 weiter verdeutlicht, weisen die beiden schaltbaren Getriebe 10 und 40 abtriebsseitig jeweils ein Stirnrad 50 bzw. 60 auf, die drehfest mit der zugeordneten Ausgangswelle 22, 49 des Getriebes verbunden sind. Diese Stirnräder 50, 60 kämmen jeweils mit zugeordneten Stirnrädern 52 bzw. 62 von Kegelradgetrieben 54 bzw. 64 mit fester Übersetzung. Diese Stirnräder 52 bzw. 62 sind mit einem Kegelrad 53 bzw. 68 drehfest verbunden oder mit diesem einstückig ausgebildet. Die Kegelräder 53 bzw. 68 kämmen jeweils mit einem zugeordneten anderen Kegelrad 56 bzw. 66, die jeweils drehfest auf der einen oder anderen Ausgangswelle 28 bzw. 45 sitzen. Von dort erfolgt die Weiterleitung des Drehmoments an die beiden Antriebsräder 4 bzw. 8 über zugeordnete Gelenkwellen 30 bzw. 46 in der oben beschrieben Weise.

Fig. 2 ist weiter entnehmbar, dass sich durch eine konstruktive Variation des jeweiligen Eingriffspunktes des Stirnrades 50, 60 des schaltbaren Getriebes 10, 40 in das zugeordnete Stirnrad 52 bzw. 62 des jeweiligen Kegelradgetriebes 54 bzw. 64 der Einbauort der Kombination aus Antriebsmaschine 2, 6 und schaltbarem Getriebe 10, 40 sozusagen durch Herumschwenken um die senkrechte Drehachse des jeweiligen Stirnrades 52, 62 des Kegelradgetriebes 54, 64 in einer Horizontalebene des Fahrzeugs einstellen lässt. Dadurch können die Kombinationen aus den Antriebsmaschinen 2, 6 und den schaltbaren Getrieben 10, 40 wie in Fig. 2 dargestellt in einer Horizontalebene quer zur Fahrzeuglängsachse 73 nebeneinander oder beispielsweise längs hintereinander angeordnet sein.

Schließlich zeigt Fig. 2, dass auch bei dieser stehenden Anordnung der Kombination aus Antriebsmaschine 2, 6 und schaltbarem Getriebe 10, 40 deren Antriebswellen 14 bzw. Abtriebswellen 22, 49 unter einem Winkel in einem Fahrzeug angeordnet sein können, der in Bezug zur genannten Horizontalebene nicht senkrecht auf der Fahrzeuglängsachse 73 steht. Dazu wird konstruktiv der Eingriffspunkt der jeweiligen Zahnräder 53 und 56 bzw. 66 und 68 derart variiert, dass dieser die für den jeweiligen Fahrzeugtyp gewünschte Position am Verzahnungsumfang des mit der Antriebswelle 28, 45 verbundenen Kegelrades 56, 66 einnimmt.

### Bezugszeichen

- 2, 2': Erste Antriebsmaschine
- 4: Antriebsrad
- 6. 6': Zweite Antriebsmaschine
- 8: Zweites Antriebsrad
- 10: Schaltbares Getriebe
- 12: Sonnenrad
- 14: Antriebswelle
- 16: Planetenradträger
- 18: Planetenräder
- 20: Hohlrad
- 22: Abtriebswelle
- 24: Kegelrad
- 26: Kegelrad
- 28: Ausgangswelle der jeweiligen Getriebeanordnung
- 29: Stirnradstufe, Stirnrad am Kegelrad 26
- 30: Gelenkwelle
- 31: Stirnrad an der Abtriebswelle 28
- 32: Planetenradgetriebe
- 34: Schaltritzel
- 36: Schaltzahnrad
- 38: Arretierverzahnung
- 40: Schaltbares Getriebe
- 41: Stirnradstufe, Stirnrad am Kegelrad 44
- 42: Kegelrad
- 43: Stirnrad an der Abtriebswelle 45
- 44: Kegelrad
- 45: Ausgangswelle der jeweiligen Getriebeanordnung
- 46: Gelenkwelle
- 48: Planetenradgetriebe
- 49: Abtriebswelle
- 50: Stirnrad
- 52: Stirnrad
- 54: Kegelradgetriebe
- 56: Kegelrad
- 58: Drehachse des kombinierten Kegel- und Stirnrades 41, 44
- 60: Stirnrad
- 62: Stirnrad
- 64: Kegelradgetriebe
- 66: Kegelrad
- 68: Kegelrad
- 70: Kegelradgetriebe
- 72: Kegelradgetriebe
- 73: Fahrzeuglängsachse
- 74: Drehachse des kombinierten Kegel- und Stirnrades 26, 29

## Patentansprüche

1. Antriebssystem für den Einzelantrieb der beiden Antriebsräder eines Antriebsräderpaares oder dergleichen für ein Fahrzeug, umfassend zwei stufenlos regelbare Antriebsmaschinen (2, 6), welche jeweils über eine Getriebeanordnung mit einem zugeordneten Antriebsrad (4, 8) oder dergleichen antriebsverbunden sind, wobei die Getriebeanordnung jeweils zwei Getriebeeinheiten umfasst, wobei eine der beiden Getriebeeinheiten als ein schaltbares Getriebe (10, 40) und die andere Getriebeeinheit als ein Kegelradgetriebe (54, 64; 70, 72) mit einer festen Übersetzung ausgebildet ist, und bei dem das Kegelradgetriebe (54, 64; 70, 72) einen Stimradsatz und einen Kegelradsatz aufweist, **dadurch gekennzeichnet, dass** die Ausgangswelle (22, 49) zumindest eines schaltbaren Getriebes (10, 40) und die Antriebswelle (14) des zugeordneten Antriebsmotors (2, 6) geneigt zur Fahrzeuglängsachse bzw. zu einer Horizontalebene ausgerichtet sind.

2. Antriebssystem nach Anspruch 1, **dadurch gekennzeichnet, dass** das schaltbare Getriebe (10, 40) jeder Getriebeeinheit ein zweistufiges Planetenradgetriebe ist, dessen Sonnenrad (12) mit einer Antriebswelle (14) verbunden ist, dessen Planetenradträger (16) mit einer Abtriebswelle (22) in Verbindung ist, und dessen Hohlrad (20) wahlweise drehfest arretierbar oder mit der Abtriebswelle (22) koppelbar ist.

3. Antriebssystem nach Anspruch 1 oder 2, **dadurch gekennzeichnet, dass** das schaltbare Getriebe (10, 40) jeder Getriebeeinheit der Antriebsmaschine (2, 6) nachgeordnet und das Kegelradgetriebe (54, 64; 70, 72) dem schaltbaren Getriebe (10, 40) nachgeordnet ist.

4. Antriebssystem nach zumindest einem der Ansprüche 1 bis 3, **dadurch gekennzeichnet, dass** der Kegelradsatz des Kegelradgetriebes (70, 72) ein erstes Kegelrad (24, 42) aufweist, welches mit der Abtriebswelle (22, 49) des schaltbaren Getriebes (10, 40) drehfest verbunden ist und mit einem zweiten Kegelrad (26, 44) in Zahneingriff ist, und dass das zweite Kegelrad (26, 44) mit einem ersten Stirnrad (29, 41) drehfest verbunden oder einstückig ausgebildet ist, welches mit einem zweiten Stirnrad (31, 43) im Zahneingriff ist, das drehfest mit der Ausgangswelle (28, 45) der jeweiligen Getriebeanordnung verbunden ist.

5. Antriebssystem nach zumindest einem der Ansprüche 1 bis 3, **dadurch gekennzeichnet, dass** der Stimradsatz des Kegelradgetriebes (54, 64) ein erstes Stirnrad (50, 60) aufweist, welches mit der Abtriebswelle (22, 49) des schaltbaren Getriebes (10, 40) drehfest verbunden ist und mit einem zweiten Stirnrad (52, 62) in Zahneinriff ist, und dass das zweite Stirnrad (52, 62) mit einem ersten Kegelrad (53, 68) drehfest verbunden oder einstückig ausgebildet ist, welches mit einem zweiten Kegelrad (56, 66) im Zahneingriff ist, das drehfest mit der Ausgangswelle (28, 45) der jeweiligen Getriebeanordnung verbunden ist.

6. Antriebssystem nach zumindest einem der vorherigen Ansprüche, **dadurch gekennzeichnet, dass** die Antriebswellen (14) der Antriebsmaschinen (2, 6) im Wesentlichen rechtwinklig zu der Drehachse des Antriebsräderpaares (4, 8) angeordnet sind, und dass das Kegelradgetriebe (54, 64; 70, 72) einen Umlenkwinkel von 90° aufweist.

7. Antriebssystem nach zumindest einem der vorherigen Ansprüche, **dadurch gekennzeichnet, dass** die Ausgangswelle (22, 49) zumindest eines schaltbaren Getriebes (10, 40) und die Antriebswelle (14) des zugeordneten Antriebsmotors (2, 6) senkrecht zur Fahrzeuglängsachse bzw. zur Horizontalebene ausgerichtet ist.

8. Antriebssystem nach zumindest einem der vorherigen Ansprüche, **dadurch gekennzeichnet, dass** die Drehachse (58, 74) des kombinierten Kegel- und Stirnrades (26, 29; 41, 44) in einer anderen horizontalen Ebene liegt wie die Drehachse der Ausgangswelle (28, 45) der jeweiligen Getriebeanordnung.

9. Antriebssystem nach zumindest einem der vorherigen Ansprüche, **dadurch gekennzeichnet, dass** die Antriebsmaschinen (2, 6) und die Getriebe (10, 40; 54, 64) für die beiden jeweils zugeordneten Antriebsräder (4, 8) in Bezug zur Fahrzeuglängsachse im Wesentlichen hintereinander oder im Wesentlichen nebeneinander angeordnet sind.

10. Antriebssystem nach zumindest einem der vorherigen Ansprüche, **dadurch gekennzeichnet,** die Antriebsmaschinen (2, 6) oberhalb der Drehachse der Ausgangswellen (28, 45) der Getriebeanordnungen angeordnet sind.

11. Antriebssystem nach zumindest einem der vorherigen Ansprüche, **dadurch gekennzeichnet, dass** die Antriebsmaschinen (2, 6) Elektromotoren sind.

12. Antriebssystem nach zumindest einem der vorherigen Ansprüche, **dadurch gekennzeichnet, dass** die Antriebsräder (4, 8) einzeln federnd aufgehängt sind, und dass diese über Gelenkwellen (30, 46) an die zugeordneten Antriebsmaschinen (2, 6) bzw. die diesen nachgeordneten Getriebeanordnungen angeschlossen sind.

## Claims

1. Drive system for the individual drive of the two driven wheels of a driven wheel pair or the like for a vehicle, comprising two drive machines (2, 6) which can be controlled in continuously variable fashion and which are drive-connected in each case by means of a transmission arrangement to an associated driven wheel (4, 8) or the like, with the transmission arrangement comprising in each case two transmission units, with one of the two transmission units being designed as a switchable transmission (10, 40) and the other transmission unit being designed as a bevel gear transmission (54, 64; 70, 72) with a fixed transmission ratio, and in which the bevel gear transmission (54, 64; 70, 72) has a spur gear set and a bevel gear set, **characterized in that** the output shaft (22, 49) of at least one switchable transmission (10, 40) and the driveshaft (14) of the associated drive motor (2, 6) are aligned obliquely with respect to the vehicle longitudinal axis and to a horizontal plane.

2. Drive system according to Claim 1, **characterized in that** the switchable transmission (10, 40) of each transmission unit is a two-stage planetary gear set whose sun gear (12) is connected to a driveshaft (14), whose planet gear carrier (16) is connected to a drive output shaft (22) and whose ring gear (20) can selectively be rotationally fixedly locked or coupled to the drive output shaft (22).

3. Drive system according to Claim 1 or 2, **characterized in that** the switchable transmission (10, 40) is positioned downstream of each transmission unit of the drive machine (2, 6) and the bevel gear transmission (54, 64; 70, 72) is positioned downstream of the switchable transmission (10, 40).

4. Drive system according to at least one of Claims 1 to 3, **characterized in that** the bevel gear set of the bevel gear transmission (70, 72) has a first bevel gear (24, 42) which is rotationally fixedly connected to the drive output shaft (22, 49) of the switchable transmission (10, 40) and which is in meshing engagement with a second bevel gear (26, 44), and **in that** the second bevel gear (26, 44) is rotationally fixedly connected to or formed in one piece with a first spur gear (29, 41) which is in meshing engagement with a second spur gear (31, 43) which is rotationally fixedly connected to the output shaft (28, 45) of the respective transmission arrangement.

5. Drive system according to at least one of Claims 1 to 3, **characterized in that** the spur gear set of the bevel gear transmission (54, 64) has a first spur gear (50, 60) which is rotationally fixedly connected to the drive output shaft (22, 49) of the switchable transmission (10, 40) and which is in meshing engagement with a second spur gear (52, 62), and **in that** the second spur gear (52, 62) is rotationally fixedly connected to or formed in one piece with a first bevel gear (53, 68) which is in meshing engagement with a second bevel gear (56, 66) which is rotationally fixedly connected to the output shaft (28, 45) of the respective transmission arrangement.

6. Drive system according to at least one of the preceding claims, **characterized in that** the driveshafts (14) of the drive machines (2, 6) are arranged substantially at right angles to the rotational axis of the driven wheel pair (4, 8), and **in that** the bevel gear transmission (54, 64; 70, 72) has a deflection angle of 90°.

7. Drive system according to at least one of the preceding claims, **characterized in that** the output shaft (22, 49) of at least one switchable transmission (10, 40) and the driveshaft (14) of the associated drive motor (2, 6) is aligned perpendicular to the vehicle longitudinal axis and to the horizontal plane.

8. Drive system according to at least one of the preceding claims, **characterized in that** the rotational axis (58, 74) of the combined bevel and spur gear (26, 29; 41, 44) is situated in a different horizontal plane to the rotational axis of the output shaft (28, 45) of the respective transmission arrangement.

9. Drive system according to at least one of the preceding claims, **characterized in that** the drive machines (2, 6) and the transmissions (10, 40; 54, 64) for the two respectively assigned driven wheels (4, 8) are arranged substantially one behind the other or substantially adjacent to one another in relation to the vehicle longitudinal axis.

10. Drive system according to at least one of the preceding claims, **characterized in that** the drive machines (2, 6) are arranged above the rotational axis of the output shafts (28, 45) of the transmission arrangements.

11. Drive system according to at least one of the preceding claims, **characterized in that** the drive machines (2, 6) are electric motors.

12. Drive system according to at least one of the preceding claims, **characterized in that** the driven wheels (4, 8) are individually resiliently suspended and **in that** said driven wheels (4, 8) are connected by means of cardan shafts (30, 46) to the associated drive machines (2, 6) or to the transmission arrangements positioned downstream thereof.

## Revendications

1. Système d'entraînement pour l'entraînement individuel des deux roues motrices d'une paire de roues motrices ou similaires pour un véhicule, comprenant deux moteurs d'entraînement réglables en continu (2, 6) qui sont connectés par entraînement à chaque fois par le biais d'un agencement de transmission à une roue motrice associée (4, 8) ou similaire, l'agencement de transmission comprenant à chaque fois deux unités de transmission, l'une des deux unités de transmission étant réalisée sous forme de transmission à changement de vitesse (10, 40) et l'autre unité de transmission étant réalisée sous forme de transmission à pignons coniques (54, 64 ; 70, 72), avec un rapport de multiplication fixe, et dans lequel la transmission à pignons coniques (54, 64 ; 70, 72) présente un jeu de pignons droits et un jeu de pignons coniques, **caractérisé en ce que** l'arbre de sortie (22, 49) d'au moins une transmission à changement de vitesse (10, 40) et l'arbre d'entraînement (14) du moteur d'entraînement associé (2, 6) sont orientés de manière inclinée par rapport à l'axe longitudinal du véhicule ou par rapport à un plan horizontal.

2. Système d'entraînement selon la revendication 1, **caractérisé en ce que** la transmission à changement de vitesse (10, 40) de chaque unité de transmission est une transmission à train planétaire à deux étages, dont la roue solaire (12) est connectée à un arbre d'entraînement (14), dont le support de roue planétaire (16) est en liaison avec un arbre de sortie (22), et dont la couronne (20) peut au choix être bloquée de manière solidaire en rotation ou être accouplée à l'arbre de sortie (22).

3. Système d'entraînement selon la revendication 1 ou 2, **caractérisé en ce que** la transmission à changement de vitesse (10, 40) de chaque unité de transmission est placée en aval du moteur d'entraînement (2, 6), et la transmission à pignons coniques (54, 64 ; 70, 72) est placée en aval de la transmission à changement de vitesse (10, 40).

4. Système d'entraînement selon au moins l'une quelconque des revendications 1 à 3, **caractérisé en ce que** le jeu de pignons coniques de la transmission à pignons coniques (70, 72) présente un premier pignon conique (24, 42), qui est connecté de manière solidaire en rotation à l'arbre de sortie (22, 49) de la transmission à changement de vitesse (10, 40) et qui est en prise d'engagement denté avec un deuxième pignon conique (26, 44), et **en ce que** le deuxième pignon conique (26, 44) est connecté de manière solidaire en rotation à un premier pignon droit (29, 41) ou est réalisé d'une seule pièce avec lui, lequel est en prise d'engagement denté avec un deuxième pignon droit (31, 43), qui est connecté de manière solidaire en rotation à l'arbre de sortie (28, 45) de l'agencement de transmission respectif.

5. Système d'entraînement selon au moins l'une quelconque des revendications 1 à 3, **caractérisé en ce que** le jeu de pignons droits de la transmission à pignons coniques (54, 64) présente un premier pignon droit (50, 60), qui est connecté de manière solidaire en rotation à l'arbre de sortie (22, 49) de la transmission à changement de vitesse (10, 40) et qui est en prise d'engagement denté avec un deuxième pignon droit (52, 62), et **en ce que** le deuxième pignon droit (52, 62) est connecté de manière solidaire en rotation à un premier pignon conique (53, 68) ou est réalisé d'une seule pièce avec lui, lequel est en prise d'engagement denté avec un deuxième pignon conique (56, 66) qui est connecté de manière solidaire en rotation à l'arbre de sortie (28, 45) de l'agencement de transmission respectif.

6. Système d'entraînement selon au moins l'une quelconque des revendications précédentes, **caractérisé en ce que** les arbres d'entraînement (14) des moteurs d'entraînement (2, 6) sont disposés essentiellement à angle droit par rapport à l'axe de rotation de la paire de roues motrices (4, 8), et **en ce que** la transmission à pignons coniques (54, 64 ; 70, 72) présente un angle de déflexion de 90°.

7. Système d'entraînement selon au moins l'une quelconque des revendications précédentes, **caractérisé en ce que** l'arbre de sortie (22, 49) d'au moins une transmission à changement de vitesse (10, 40) et l'arbre d'entraînement (14) du moteur d'entraînement associé (2, 6) sont orientés perpendiculairement à l'axe longitudinal du véhicule ou au plan horizontal.

8. Système d'entraînement selon au moins l'une quelconque des revendications précédentes, **caractérisé en ce que** l'axe de rotation (58, 74) de la combinaison de pignon conique et de pignon droit (26, 29 ; 41, 44) se trouve dans un autre plan horizontal que l'axe de rotation de l'arbre de sortie (28, 45) de l'agencement de transmission respectif.

9. Système d'entraînement selon au moins l'une quelconque des revendications précédentes, **caractérisé en ce que** les moteurs d'entraînement (2, 6) et les transmissions (10, 40 ; 54, 64) pour les deux roues motrices associées respectives (4, 8) sont disposés, par rapport à l'axe longitudinal du véhicule, essentiellement les uns derrière les autres ou essentiellement les uns à côté des autres.

10. Système d'entraînement selon au moins l'une quelconque des revendications précédentes, **caractérisé en ce que** les moteurs d'entraînement (2, 6) sont disposés au-dessus de l'axe de rotation des arbres de sortie (28, 45) des agencements de transmission.

11. Système d'entraînement selon au moins l'une quelconque des revendications précédentes, **caractérisé en ce que** les moteurs d'entraînement (2, 6) sont des moteurs électriques.

12. Système d'entraînement selon au moins l'une quelconque des revendications précédentes, **caractérisé en ce que** les roues motrices (4, 8) présentent une suspension à ressort individuelle, et **en ce qu'**elles sont raccordées par le biais d'arbres articulés (30, 46) aux moteurs d'entraînement associés (2, 6) ou aux agencements de transmission placés en aval de ces derniers.
